# EUROPEAN PATENT SPECIFICATION

(11) **EP 0 487 978 B1**
(45) Date of publication and mention of the grant of the patent: **10.08.1994**
(21) Application number: 91119375.3
(22) Date of filing: 13.11.1991
(51) Int. Cl.: B28B 23/00, B44F 9/04, B28B 3/00, B28B 17/02

(54) **Manufacturing method for pottery provided with flowing patterns or spreading patterns**
Verfahren zum Herstellen von Tonwaren mit Strömungsbilddekor oder Flammierung
Procédé de fabrication de poteries avec motifs en forme de chinure ou de couleurs étalées

(30) Priority: 30.11.1990 JP 338939/90; 29.05.1991 JP 228147/91; 29.05.1991 JP 228148/91
(43) Date of publication of application: 03.06.1992
(73) Proprietor: INAX CORPORATION, Tokoname-Shi Aichi-Ken 479 (JP)
(72) Inventor: Shibachi, Tomoaki, Tokoname-shi, Aichi-ken (JP); Morishita, Mitsuo, Tokoname-shi, Aichi-ken (JP)
(74) Representative: DIEHL GLAESER HILTL & PARTNER

(56) References cited:
- EP-A- 0 414 149
- DE-A- 2 114 706
- DE-A- 3 813 851
- US-A- 1 931 667

## Description

The present invention relates to a manufacturing method for pottery, which covers pottery, in general, of building material, such as a tile or a roof tile, and sanitary wares, such as stools or washbowls, and furthermore tablewares and ornaments and others and which provides on the surface flowing patterns appearing on marble or the like, or spreading patterns composed of a plurality of color regions viewed as crushed.

Conventionally, in order to manufacture pottery looking like a marble product, a process of glazing by dripping on a mold prior to baking is repeated respectively with several kinds of glaze different in color development and then the mold is baked.

In other words, the mold in a step of baking is laminated with a plurality of layers of glaze different in coloring, whereby, when each glaze begins to melt, the glaze react which each other at a certain part to form fusion colors and a single color of each glaze appears at other parts, which forms flowing patterns of mixed plural colors which look like a marble product.

However, the above-mentioned conventional manufacturing method has defects in the following points. Since the glaze previously dissolves therein various gases, the gases are ejected by baking and apt to cause pin holes or bubbles on the surface of patterns of the pottery. Since the glazes are dashed on the mold plural times, air is apt to be involved between the respective glaze layers, and a relatively large recess may be created on the pattern surface of pottery after baking. For preventing such defect, a thickness of applied glaze must be increased to a certain extent. Therefore, the glazing work is troublesome and requires much time. Also, the glazes of respective coloring are apt to flow in one direction during the baking, whereby the patterns in marble mode are less in variation.

EP-A-0414 149 (published 27-02-1991) from the same Applicant discloses a method for producing a pattern-inlaid ceramic tile, including preparing a paste mixture consisting of a sintering powder, a pigment, a binder and a solvent and depositing the paste mixture onto a substrate sheet through a predetermined pattern opening.

The present invention has been designed in the light of the above-mentioned circumstances.

An object of the invention is to provide a manufacturing method for pottery provided with flowing patterns or spreading patterns, which can prevent generation of pin holes, bubbles and relatively larger recesses, and can obtain variations rich in patterning not limited to marble patterns.
Fig. 1 is a schematic view showing a process to obtain sheet material provided with flowing patterns of the present invention,
Fig. 2 is a schematic view showing a process to obtain sheet material provided with spreading patterns of the present invention,
Fig. 3 is a sectional view of stretching a sheet material onto a mold by use of a dry press device,
Fig. 4 is a sectional view showing the state where the sheet material of Fig. 3 is stuck to the mold,
Fig. 5 is a perspective view of pottery constituted by sticking onto the mold a sheet material provided with flowing patterns,
Fig. 6 is a perspective view of pottery decorative in an inlaying manner, on which a sheet material provided with spreading patterns is stuck,
Fig. 7 is a perspective view of pottery on which a sheet material provided with spreading patterns is stretched by the a press, and
Fig. 8 is a perspective view of pottery on which a sheet material provided with spreading patterns is stuck.

Next, an embodiment of the present invention will be described in accordance with the drawings as follows:

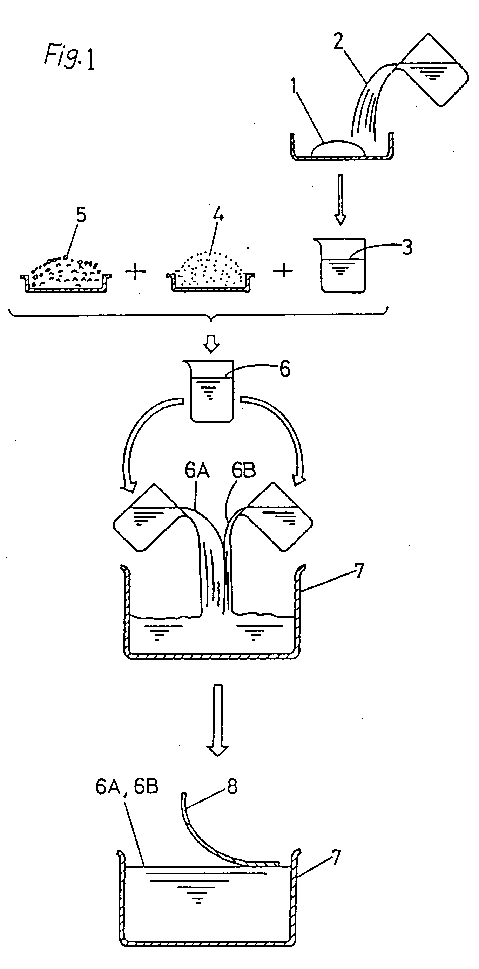

Fig. 1 is a schematic view to depict the process of the present invention for easy understanding. At first, as shown at the uppermost portion in Fig. 1, at first starch paste 1 or the like is mixed with water 2 to prepare a binder liquid 3. Pigment 4 having proper coloring and the binder liquid 3 prepared as above are mixed with molding material clay 5 of the same quality as that used when the pottery is molded, thereby manufacturing decorative raw material liquid 6.

The decorative raw material liquid 6 must be kept in slurry of a viscosity of about 2000 m Pa·s (cP). However, when the viscosity is too low, insufficient holding of liquid 6 is generated when stuck to a sheet material 8 to be discussed below, and, when it is too high, there is the risk that the liquid 6 cannot be held, whereby care should be taken. Also, for the decorative raw material liquid 6, plural kinds of liquids (6A and 6B) are prepared with respect to the pigments 4 different in coloring.

Next, the decorative raw material liquids (6A and 6B) different in coloring each are poured at every proper amount into a container 7. After pouring, the container 7 is given rotation or vibrations, the decorative raw material liquids 6A and 6B in the container 7 are directly lightly agitated, and compressed air is blown onto the liquid surface to be waved, thereby mixing the liquids to the extent that each sole color still remains.

For example, now it is assumed that a large quantity of white liquid is used as the decorative raw material liquid 6A and a little red liquid is used as that 6B. In this case, it is not desirable that both colors are mixed to form a pink region at a part within the container 7, since, when the whole region therein is dyed pink, patterns cannot be obtained. Therefore, in the container 7, residual regions white and red (or either one) are required on the liquid surface. In other words, the state where red and pink stripe-patterns and scroll-patterns are formed in a white ground or white and red stripe-patterns and scroll-patterns are formed, is obtained.

After completion of this work, a sheet material 8 of woven fabric, non woven fabrics, paper or the like, and having water absorptivity is slowly brought into contact with the liquid surface within the container 7. In fact, the sheet material 8 need only be floated on the liquid surface. Hence, the decorative raw material liquids 6A and 6B in mixing condition on the liquid surface is attracted and held onto the sheet material 8 as it is in the mixing condition. The decorative raw material liquids 6A and 6B are enough to be stuck by about 1 mm in thickness onto the surface of the sheet material 8, whereby at this time point the sheet material 8 is taken out from the container 7.

Next, explanation will be given on patterning by a dry press device 9.

In a case where the sheet material 8 is stretched onto the surface of the mold 11 by the dry press device 9, the decorative raw material liquids 6A and 6B are enough to be stuck by about 1 mm in thickness onto the surface of sheet material 8, whereby at this time point the sheet material 8 is taken out from the container 7 and dried. The drying condition is allowed to meet a percentage of water content, normally about 4 %, required to the molding material clay 5 for tile molding.

After the decorative raw material liquid on the sheet material 8 dried, the sheet material 8 together with the molding material clay 5 is filled into a molding recess 10 of the dry press device 9, the sheet material 8 and clay 5 being not problematical as to which is to be positioned as the upper and lower layers in the molding recess 10, but it is preferable to position the sheet material 8 as the upper layer from the viewpoint of workability.

In addition, regarding the sheet material 8, of course the decorative raw material liquid stuck thereon inevitably faces the molding clay 5 to be in surface contact therewith, and the tile raw base obtained by being pressed in such condition is baked. In addition, the sheet material 8 is stuck onto the tile raw base at the side of the pattern surface layer, which may be peeled out before baking or burnt out by baking.

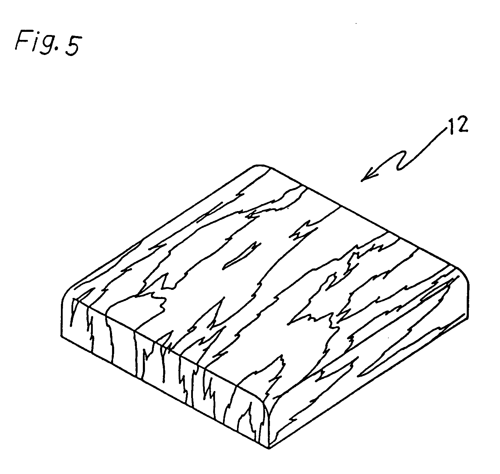

Next, explanation will be given on a case where the sheet material 8 is stuck onto the mold 11 as shown in Fig. 4.

In the case where the sheet material 8 is stuck onto the mold 11, immediately before the decorative raw material liquids 6A and 6B held to the sheet material 8 are properly dried, the sheet material 8 is stuck in a manner of extending along the surface configuration with respect to the mold 11 of pottery prior to baking. For example, in this embodiment, the sheet material 8 can be stretched in such a manner that it comes into close contact with all the four side surfaces of mold 11. In addition, when the sheet material 8 permeated with the decorative raw material liquids 6A and 6B is dried, it is preferable that the degree of drying is coincident with a percentage of water content, normally about 4 %, required by the mold 11 itself.

The mold 11 obtained as above is baked on the basis of the baking conditions (method, temperature, time or the like) corresponding to thickness, configuration, and raw material. In addition, even when the mold 11, on which the sheet material 8 is stuck, is baked, the sheet material 8 is burnt out by baking, whereby the pottery after baking is not at all affected adversely.

However, the sheet material 8 can be peeled out from the mold 11 prior to its baking. In other words, the decorative raw material liquids 6A and 6B held by the sheet material 8 are gradually permeated into the mold 11 so that the entire liquids, after a while, are held in the mold 11. Accordingly, at this time the sheet material 8 can be peeled out by itself.

The mold 11, from which the sheet material 8 has been peeled out, can be baked as it is, but can be baked after a glaze colorless transparent or colored transparent of a transparent composition is applied thereon.

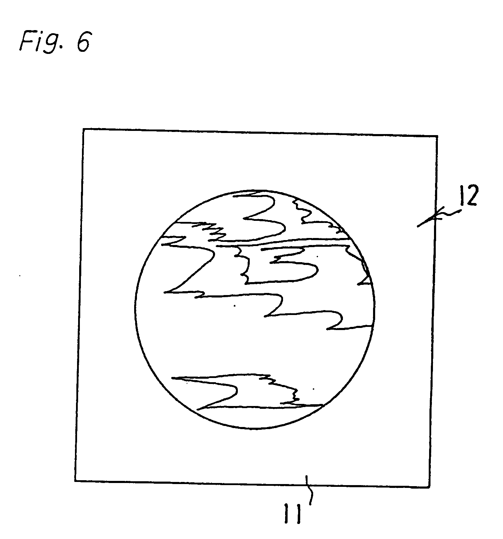

Thus, as shown in Fig. 5, the flowing patterns obtained at the pottery after baking have depth and polish, thereby being particulary beautiful.

Pottery 12 with the flowing patterns has on the entire surface thereof natural and dreamly flowing patterns.

Next, explanation will be given on an embodiment in Fig. 6.

The sheet material 8 can be made smaller in the size of its outline than that of the plane of the decorative tile to be obtained, and its outer configuration can be optional, such as, round or starlike. In this case, the tile molding material clay 5 is filled in the outer periphery of the sheet material 8 by the press, so that, as shown in Fig. 6, the decorative tile as a whole is patterned as inlay. In addition, in such embodiment, not only the outer configuration of sheet material 8 is modified but also a proper masking is applied with respect to a large sheet material 8, thereby enabling an attractable region with respect to the decorative raw material liquid to be specified. Thus, construction covering details of the method of the present invention is properly changeable corresponding to the mode of execution.

Next, explanation will be given on the case where the decorative raw material liquid 6 is expanded on the flat surface 17 so as to obtain a sheet material 8 of spreading patterns.

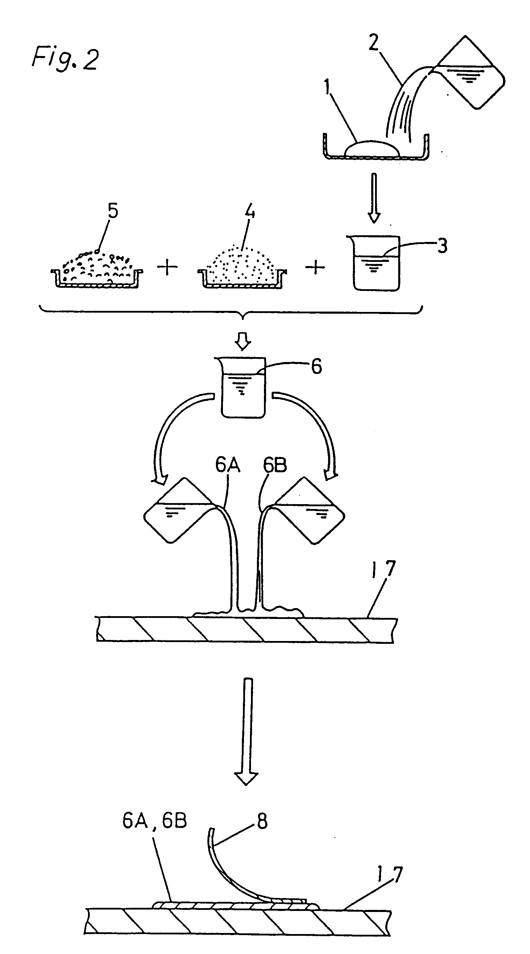

Fig. 2 is a schematic view depicting to understand with ease the process of method to obtain the spreading patterns. At first, starch paste 1 is mixed with water 2 to have prepared a binder liquid 3, and pigment 4 having proper coloring and the binder liquid 3 prepared as above-mentioned are mixed with molding material clay 5 having the quality as that used for forming molded pottery, thereby manufacturing the decorative raw material liquid 6.

The decorative raw material liquid 6 should be kept in slurry of a viscosity of about 2000 mPa·s (cP).

Also, as to the decorative raw material liquid 6, plural kinds of decorative raw material liquids 6A and 6B have been prepared for pigments different in color.

Next, on the proper flat surface 17, such as a desk surface or a pallet surface for coloring, the decorative raw material liquids 6A and 6B of different colors (at least two colors) produced as above are flowed in every proper amount. The flat surface 17 itself is vibrated, the decorative raw material liquids 6A and 6B are directly gently agitated, or compressed air is blown on the liquid surface to be waved, thereby keeping a coloring state where each sole color still remains.

For example, it is assumed that a large amount of white color is used as the decorative raw material liquid 6A and a small amount of red color is used as color 6B. In this case, it is not problematical that both the colors are mixed to form pink regions, but if the whole regions are dyed in pink, patterns cannot be formed. In other words, it is required that on the liquid surface, regions where white and red colors (or either one) still remain as they are. Accordingly, the liquid surface is put in the state where red and pink stripe-patterns or scroll-patterns are formed on a white ground, or white and red stripe-patterns or scroll-patterns are formed on a pink ground.

After completion of the above work, the sheet material 8 of woven fabric, nonwoven fabric, paper or the like, having water absorptivity is allowed to abut against the liquid surface on the flat surface 17 and then the sheet material 8 is urged thereon.

Hence, the decorative raw material liquids 6A and 6B appear as squashed or spreaded as a whole in the coloring state, which are directly attracted and held onto the sheet material 8.

Upon confirming that the decorative raw material liquids 6A and 6B are stuck by about 1 mm in thickness onto the surface of sheet material 8, the sheet material 8 is lifted from the flat surface 17 and the decorative raw material liquids 6A and 6B held onto the sheet material 8 wait to be put in a proper dry condition. The degree of dryness of the decorative raw material liquids is preferred to be set as the same as the percentage of water content, usually about 4 %, required by the mold.

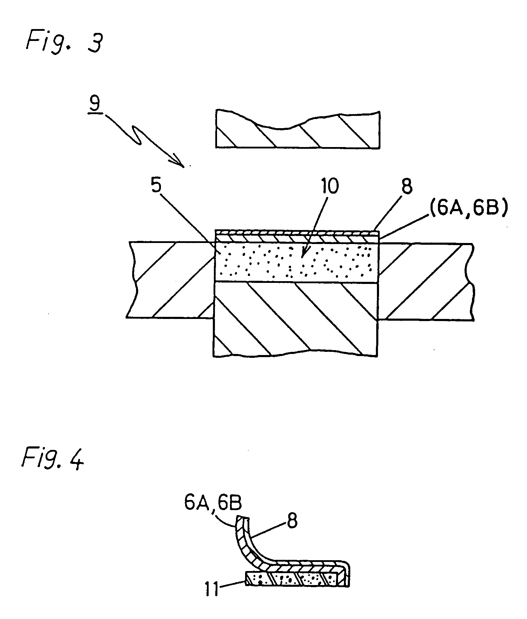

Next, as shown in Fig. 3, the above-mentioned sheet material 8 together with the molding material clay 5 for molding is charged into the molding recess 10 at the dry press device 9 for forming the mold, the sheet material 8 and molding material clay 5 being not problematical as to whether they are positioned at the upper layer or the lower layer. The mold, such as tile raw basis, pressed and obtained in the above state is baked on the basis of baking condition corresponding to its thickness, configuration and raw material.

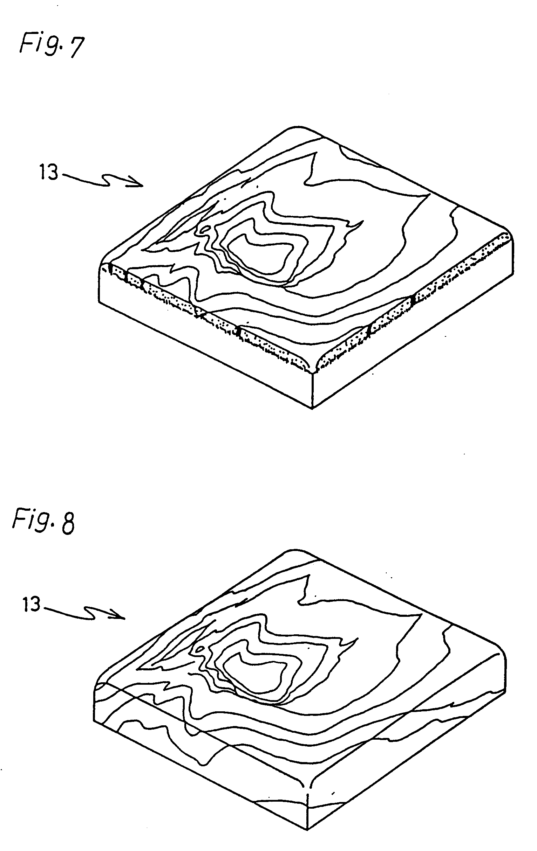

As shown in Fig. 7, spreading pattern pottery 13 is obtained after baking and its upper surface shows natural and dreamy spreading patterns which are extremely beautiful.

As shown in Fig. 8, with respect to the mold 11 having been molded but before baked, it is possible that the sheet material 8 onto which the decorative raw material liquids 6A and 6B have already been attracted is stretched and stuck on the surface of mold 11 along the configuration thereof. In other words, the case where the mold 11 is a flat-plate-like tile raw basis as shown, the sheet material 8 can be stuck in close contact with four side surfaces of mold 11. Accordingly, when the mold 11 is baked, as shown in Fig. 8, the spreading pattern pottery 13 is provided at all surfaces including with the natural and dreamy spreading patterns.

As seen from the above, the pottery manufacturing method of the present invention can manufacture the pottery provided with flowing patterns or spreading patterns without producing pin holes, bubbles or recesses. Patterns produced by mutually coloring the decorative raw material liquids different in color and pressing, makes natural and dreamy stripe-patterns or scroll-patterns which resemble to, for example, marble. Moreover, the patterns can be provided at the pottery of complicated rough configuration, and the workability of potteries is as simple as that of simple configuration of flat plate material. Furthermore, the modification of color selection, the number of use and coloring condition leads to an infinite development, whereby the present invention is advantageous in that pattern variation of produced pottery can infinitely be extended.

## Claims

1. A manufacturing method for decorative tiles, characterized by preparing a number of different kinds of decorative raw material liquids (6, 6A, 6B) by mixing a molding material clay (5) for pottery with a binder liquid (3) and pigments (4) under slurry conditions, said liquids (6, 6A, 6B) having different colors, pouring said respective decorative raw material liquids (6, 6A, 6B) into a container (7) and mixing them into a state where at least two colors of single or mixed colors remain, abutting then a sheet material (8) having a water absorptivity against the liquid surface in said container (7) so that said decorative raw material liquids (6, 6A, 6B) stick to the sheet material by adsorption, charging said sheet material (8) into a molding recess (10) at a dry press device (9) after said decorative raw material liquids (6, 6A, 6B) at said sheet material (8) are properly dried, charging also a molding material clay (5) into said recess (10) and pressing the arrangement, and thereafter peeling off said sheet material (8) from the obtained tile raw basis and baking the tile raw basis or baking the arrangement without the peeling-off step.

2. A manufacturing method for pottery provided with flowing patterns as set forth in Claim 1, characterized in that said sheet material (8) to which said decorative raw material liquids (6, 6A, 6B) are sticking by absorption is stuck onto a mold (11) of pottery prior to baking, in a manner of extending along the surface configuration, and the obtained mold is baked.

3. A manufacturing method for pottery provided with flowing patterns as set forth in Claim 1, characterized in that said sheet material (8) to which said decorative raw material liquids (6, 6A, 6B) are sticking, is stuck onto a mold (11) of pottery prior to baking in a manner of extending along the surface configuration thereof, so that said sheet material (8) is peeled off from said mold (11) after said decorative raw material liquids (6, 6A, 6B) held to said sheet material (8) are transferred to said mold (11), and the obtained mold is provided at its surface with a glaze of a transparent composition and baked.

4. A manufacturing method for pottery provided with spreading patterns, characterized in that plural kinds of decorative raw material liquids (6, 6A, 6B) are prepared by mixing a pottery molding material clay (5) with a binder liquid (3) and pigments (4) under slurry conditions, said liquids (6, 6A, 6B) having different colors, said decorative raw material liquids (6, 6A, 6B) are flowed on a proper flat surface (17) so that the liquid surface of said decorative raw material liquids (6, 6A, 6B) is put in the colored state where at least two colors of each sole color or mixed colors remain, a sheet material (8) having water absorptivity is abutted against and pressed on said flat surface (17) to stick said decorative raw material liquids (6, 6A, 6B) thereto by adsorption, said sheet material (8) is charged into a molding recess (10) at a dry press device (9) after said decorative raw material liquids (6, 6A, 6B) are properly dried, said pottery molding material clay (5) also is charged into said recess (10) and pressed, and thereafter said sheet material (8) is peeled off from said obtained mold (11) and the obtained mold is baked or baking is carried out without the peeling-off step.

5. A manufacturing method for pottery provided with spreading patterns as set forth in Claim 4, characterized in that sheet material (8) sticking to said decorative raw material liquids (6, 6A, 6B) by absoption, is stuck after or before being dried onto said mold (11) before being baked in a manner of extending along the surface configuration thereof, and the obtained mold (11) is baked.

6. A manufacturing method for pottery provided with spreading patterns as set forth in Claim 4, characterized in that said sheet material (8) sticking to said decorative raw material liquids (6, 6A, 6B) by absorption, is stuck onto said mold (11) before being baked in a manner of extending along the surface configuration thereof, said sheet material (8) is peeled off from said mold (11) after said decorative raw material liquids (6, 6A, 6B) are transferred to said mold, and a glaze of a transparent composition is applied onto the surface of said obtained mold (11) to be baked.

## Patentansprüche

1. Verfahren zum Herstellen von Dekor-Keramikplatten, gekennzeichnet durch das Herstellen einer Anzahl von verschiedenen Sorten von Dekor-Rohmaterialflüssigkeiten (6, 6A, 6B) durch Mischen eines Formmaterials aus Ton (5) für eine Tonware mit einer Bindeflüssigkeit (3) und Pigmenten (4) unter Aufschlämmungsbedingungen, wobei die Flüssigkeiten (6, 6A, 6B) verschiedene Farben aufweisen, durch Gießen der entsprechenden Rohmaterialflüssigkeiten (6, 6A, 6B) in einen Behälter (7) und durch deren Vermischen in einen Zustand, bei dem mindestens zwei einzelne oder gemischte Farben erhalten bleiben, durch anschließendes Angrenzenlassen eines dünnschichtigen Materials (8) mit Wasserabsorptionsvermögen an die Oberfläche der Flüssigkeit im Behälter (7), so daß die Dekor-Rohmaterialflüssigkeiten (6, 6A, 6B) durch Absorption an dem dünnschichtigen Material (8) anhaften, durch Einbringen des dünnschichtigen Materials (8) in eine Formvertiefung (10) an einer Trockenpreßeinrichtung (9), nachdem die Dekor-Rohmaterialflüssigkeiten (6, 6A, 6B) an dem dünnschichtigen Material (8) angemessen getrocknet sind, durch weiteres Einbringen eines Formmaterials aus Ton (5) in die Vertiefung (10) und durch Andrücken dieser Anordnung und durch anschließendes Abschälen des dünnschichtigen Materials (8) von dem erhaltenen Keramikplattenrohmaterial und durch Brennen des Keramikplattenrohmaterials oder durch Brennen der Anordnung ohne den Abschälschritt.

2. Verfahren zum Herstellen von Tonwaren mit Strömungsbilddekor nach Anspruch 1, dadurch gekennzeichnet, daß das dünnschichtige Material (8), an dem die Dekor-Rohmaterialflüssigkeiten (6, 6A, 6B) durch Absorption anhaften, auf einem Formstück (11) einer Tonware vor dem Brennen so anhaftet, daß es sich entlang der Oberflächengestalt erstreckt, und daß das erhaltene Formstück gebrannt wird.

3. Verfahren zum Herstellen von Tonwaren mit Strömungsbilddekor nach Anspruch 1, dadurch gekennzeichnet, daß das dünnschichtige Material (8), an dem die Dekor-Rohmaterialflüssigkeiten (6, 6A, 6B) anhaften, auf einem Formstück (11) einer Tonware vor dem Brennen so anhaftet, daß es sich entlang deren Oberflächengestalt erstreckt, so daß das dünnschichtige Material (8) von dem Formstück (11) abgeschält werden kann, nachdem die Dekor-Rohmaterialflüssigkeiten (6, 6A, 6B), die an dem dünnschichtigen Material (8) anhaften, zu dem Formstück (11) übertragen wurden, und daß das erhaltene Formstück an seiner Oberfläche mit einer transparenten Glasur versehen ist und gebrannt wird.

4. Verfahren zum Herstellen von Tonwaren mit Flammierung, dadurch gekennzeichnet, daß verschiedene Sorten von Dekor-Rohmaterialflüssigkeiten (6, 6A, 6B) durch Mischen eines Formmaterials aus Ton (5) für Tonwaren mit einer Bindeflüssigkeit (3) und Pigmenten (4) in einem Aufschlämmungszustand hergestellt werden, wobei die Flüssigkeiten (6, 6A, 6B) verschiedene Farben aufweisen, daß die Dekor-Rohmaterialflussigkeiten (6, 6A, 6B) auf eine geeignet glatte Fläche (17) gegossen werden, so daß die Oberfläche der Dekor-Rohmaterialflussigkeiten (6, 6A, 6B) in einen gefärbten Zustand versetzt wird, bei dem wenigstens zwei Farben der einzelnen Grundfarben oder gemischte Farben erhalten bleiben, daß ein dünnschichtiges Material (8) mit Wasserabsorptionsvermögen an die glatte Fläche (17) angrenzt und daran angedrückt wird, um die Dekor-Rohmaterialflüssigkeiten (6, 6A, 6B) durch Absorption daran anhaften zu lassen, daß das dünnschichtige Material (8) an einer Trockenpreßeinrichtung (9) in eine Formvertiefung (10) eingebracht wird, nachdem die Dekor-Rohmaterialflussigkeiten (6, 6A, 6B) angemessen getrocknet worden sind, daß das Formmaterial aus Ton (5) für Tonwaren ebenso in die Vertiefung (10) eingebracht und angedrückt wird und daß dann das dünnschichtige Material (8) von dem erhaltenen Formstück (11) abgeschält wird und das erhaltene Formstück (11) gebrannt wird oder daß das Brennen ohne den Abschälschritt ausgeführt wird.

5. Verfahren zum Herstellen von Tonwaren mit Flammierung nach Anspruch 4, dadurch gekennzeichnet, daß das dünnschichtige Material (8), das an den Dekor-Rohmaterialflüssigkeiten (6, 6A, 6B) durch Absorption anhaftet, auf dem Formstück (11) nach oder vor dem Trocknen aufgebracht wird, bevor es so gebrannt wird, daß es sich entlang dessen Oberflächengestalt erstreckt, und daß das erhaltene Formstück (11) gebrannt wird.

6. Verfahren zum Herstellen von Tonwaren mit Flammierung nach Anspruch 4, dadurch gekennzeichnet, daß das dünnschichtige Material (8), das an den Dekor-Rohmaterialflüssigkeiten (6, 6A, 6B) durch Absorption anhaftet, auf dem Formstück (11) vor dem Brennen so aufgebracht wird, daß es sich entlang dessen Oberflächengestalt erstreckt, daß das dünnschichtige Material (8) von dem Formstück (11) abgeschält wird, nachdem die Dekor-Rohmaterialflüssigkeiten (6, 6A, 6B) auf das Formstück übertragen worden sind, und daß eine transparente Glasur auf die Oberfläche des erhaltenen Formstückes (11) aufgebracht wird, um gebrannt zu werden.

## Revendications

1. Procédé de fabrication pour des tuiles décoratives, caractérisé en ce qu'il faut préparer un certain nombre de différentes sortes de liquides de matière première décoratifs (6, 6A, 6B) en mélangeant un matériau de moulage en argile (5) pour poterie avec un liquide liant (3) et des pigments (4) à l'état de boue liquide, lesdits liquides (6, 6A, 6B) ayant des couleurs différentes, verser lesdits liquides respectifs de matière première décoratifs (6, 6A, 6B) dans un conteneur (7) et les mélanger pour obtenir un état où au moins deux couleurs unies ou mélangées restent, appuyer ensuite un matériau en feuille (8) ayant un pouvoir absorbant en eau contre la surface liquide dudit conteneur (7) de sorte que lesdits liquides de matière première décoratifs (6, 6A, 6B) collent au matériau en feuille par absorption, introduire ledit matériau en feuille (8) dans une cavité de moulage (10) sur un dispositif de presse sèche (9) après que lesdits liquides de matière première décoratifs (6, 6A, 6B) sur ledit matériau en feuille (8) sont convenablement séchés, introduire également un matériau de moulage en argile (5) dans ladite cavité (10) et presser l'agencement, et ensuite décoller ledit matériau en feuille (8) de la base brute de tuile et cuire la base brute de tuile ou cuire l'agencement sans l'étape consistant à décoller le matériau en feuille (8).

2. Procédé de fabrication pour poteries avec des motifs en forme de chinure comme exposé dans la revendication 1, caractérisé en ce que ledit matériau en feuille (8) auquel les liquides de matière première décoratifs (6, 6A, 6B) collent par absorption, est collé sur un moule (11) de poterie avant cuisson, de manière à s'étendre le long de la configuration de surface, et le moule obtenu est cuit.

3. Procédé de fabrication pour poteries avec des motifs en forme de chinure comme exposé dans la revendication 1, caractérisé en ce que ledit matériau en feuille (8) auquel les liquides de matière première décoratifs (6, 6A, 6B) collent, est collé sur un moule (11) de poterie avant cuisson, de manière à s'étendre le long de sa configuration de surface, de sorte que ledit matériau en feuille (8) est décollé dudit moule (11) après que lesdits liquides de matière première décoratifs (6, 6A, 6B) retenus sur ledit matériau en feuille (8) sont transférés audit moule (11), et le moule obtenu est muni à sa surface d'une glaçure de composition transparente et est cuit.

4. Procédé de fabrication pour des poteries avec des motifs de couleurs étalées, caractérisé en ce plusieurs sortes de liquides de matière première décoratifs (6, 6A, 6B) sont préparées en mélangeant un matériau de moulage en argile (5) avec un liquide liant (3) et des pigments (4) à l'état de boue liquide, lesdits liquides (6, 6A, 6B) ayant des couleurs différentes, lesdits liquides de matière première décoratifs (6, 6A, 6B) prennent la forme de chinure sur une surface plate appropriée (17), de sorte que la surface liquide desdits liquides de matière première décoratifs (6, 6A, 6B) se trouve dans l'état de coloration où au moins deux couleurs chacune unie ou de couleurs mélangées restent, un matériau en feuille (8) ayant un pouvoir absorbant en eau est appuyé et pressé contre ladite surface plate (17) pour coller lesdits liquides de matière première décoratifs (6, 6A, 6B) à celle-ci par absorption, ledit matériau en feuille (8) est introduit dans une cavité de moulage (10) sur un dispositif de presse sèche (9) après que lesdits liquides de matière première décoratifs (6, 6A, 6B) sont convenablement séchés, ledit matériau de moulage de poterie en argile (5) est également introduit dans ladite cavité (10) et pressé ensuite, ledit matériau en feuille (8) est décollé dudit moule obtenu (11) et le moule obtenu est cuit ou la cuisson est effectuée sans l'étape consistant à décoller le matériau en feuille.

5. Procédé de fabrication pour des poteries avec des motifs de couleurs étalées, comme exposé dans la revendication 4, caractérisé en ce que le matériau en feuille (8) collant audits liquides de matière première (6, 6A, 6B) par absorption est collé après ou avant d'être séché sur ledit moule (11) avant d'être cuit de manière à s'étendre le long de sa configuration de surface, et le moule (11) obtenu et cuit.

6. Procédé de fabrication pour des poteries avec des motifs de couleurs étalées, comme exposé dans la revendication 4, caractérisé en ce que le matériau en feuille (8) collant auxdits liquides de matière première décoratifs (6, 6A, 6B) par absorption, est collé sur ledit moule (11) avant d'être cuit de manière à s'étendre le long de sa configuration de surface, ledit matériau en feuille (8) est décollé dudit moule (11) après que lesdits liquides de matière première décoratifs (6, 6A, 6B) sont transférés audit moule et une glaçure de composition transparente est appliquée sur la surface dudit moule obtenu (11) à cuire.
